Europäisches Patentamt

European Patent Office

Office européen des brevets

(19)

(11) Veröffentlichungsnummer: **0 076 929**
**B1**

(12) **EUROPÄISCHE PATENTSCHRIFT**

(45) Veröffentlichungstag der Patentschrift:
27.03.85

(51) Int. Cl.⁴: **B 29 D 23/00**

(21) Anmeldenummer: **82108486.0**

(22) Anmeldetag: **15.09.82**

(54) Verfahren und Vorrichtung zum Herstellen eines Schaumstoffrohres mit Verschluss.

(30) Priorität: **10.10.81 DE 3140388**

(43) Veröffentlichungstag der Anmeldung:
**20.04.83 Patentblatt 83/16**

(45) Bekanntmachung des Hinweises auf die Patenterteilung:
**27.03.85 Patentblatt 85/13**

(84) Benannte Vertragsstaaten:
**AT BE CH DE FR GB IT LI LU NL SE**

(56) Entgegenhaltungen:
**DE - A - 2 532 406**
**DE - A - 2 645 771**
**DE - B - 1 162 543**
**DE - B - 2 512 755**
**DE - C - 1 915 768**

(73) Patentinhaber: **DYNAMIT NOBEL AKTIENGESELLSCHAFT, Postfach 1209, D-5210 Troisdorf, Bez. Köln (DE)**

(72) Erfinder: **Osterhagen, Gerhard, Sommerichweg 1, D-5208 Eitorf (DE)**
Erfinder: **Feige, Siegfried, Mühlenhofweg 35, D-5200 Siegburg 1 (DE)**

BUNDESDRUCKEREI BERLIN

# Beschreibung

Die Erfindung bezieht sich auf ein Verfahren zum Herstellen eines in Längserstreckung geschlitzten Rohres aus einer Bahn aus einem thermoplastischen Schaumstoff durch Formen der Bahn in erwärmtem thermoelastischen bzw. thermoplastischem Zustand quer zu ihrer Längserstreckung zum Rohrquerschnitt und Aufbringen der Bänder eines Verschlusses insbesondere Gleitverschlusses aus thermoplastischem Kunststoff an den einander zugekehrten Längskanten des Rohrschlitzes durch Schweißen, Heißsiegeln, Verkleben o. dgl. Weiterhin ist Gegenstand der Erfindung eine Vorrichtung zum Durchführen des Verfahrens, ausgehend von einem umlaufenden Transportband für die kontinuierlich zulaufende Schaumstoffbahn, einem Einlauftrichter und einer Einrichtung zum Verschließen des Schlitzes und einer Zufuhreinrichtung für die Verschlußbänder.

Es ist bekannt, Isolierrohre aus Schaumstoffstreifen durch Warmformung und Verschweißen oder Verkleben der Stoßkanten herzustellen, siehe beispielsweise deutsche Patentschrift 2 532 406 und deutsche Patentschrift 1 915 768. Es sind auch Verfahren bekannt, derart hergestellte Rohre mit wieder lösbaren Verschlüssen, z. B. Gleitverschlüssen zu versehen, siehe beispielsweise deutsche Offenlegungsschrift 2 509 833 und DE-AS 2 512 755. Solche Rohre haben Vorteile bei der Aufbringung zur nachträglichen Isolierung bereits verlegter Rohrleitungen durch die einfache Montage.

Bei den bisher bekannten Verfahren zur Herstellung von Isolierrohren mit Verschlußsystemen werden, wie beispielsweise in der DE-PS 2 532 406 beschrieben, in einem zusätzlichen Arbeitsgang fertig konfektionierte am Umfang geschlossene Schaumstoffrohre zunächst an einer Stelle ihres Umfangs in Längsrichtung wieder geschlitzt und dann auf dem Bereich neben der Trennstelle die Verschlußbänder aufgebracht.

Es ist auch bereits vorgeschlagen worden, die Verschlußbänder direkt auf die Schaumstoffoberfläche zu extrudieren, hierbei ergeben sich jedoch erhebliche Probleme bei der Herstellung maßhaltiger formtreuer Gleitverschlußbänder, die miteinander verhakt werden sollen.

Der Erfindung liegt die Aufgabe zugrunde, die bekannten Verfahren und Vorrichtungen zum Herstellen von Isolierrohren aus Schaumstoffen mit lösbaren Verschlüssen so zu verbessern, daß bereits bei der Formung der Schaumstoffstreifen zu den Rohren die Verschlüsse aufgebracht werden und gleichzeitig formtreue, gerade Rohre hergestellt werden. Damit soll der zusätzliche Arbeitsschritt des nachträglichen Schlitzens der geformten Rohre und Aufbringen der Verschlüsse entfallen.

Ausgehend beispielsweise von einem Verfahren zur Rohrherstellung wie es in der deutschen Patentschrift 2 532 406 beschrieben ist, wird erfindungsgemäß vorgeschlagen, daß die Verschlußbänder vor dem Verbinden entlang der Längskante mit dem geformten noch erwärmten Schaumstoffrohr in dem selben Maß durch Einwirkung einer Zugspannung gelängt werden, wie das Schaumstoffrohr nach dem Aufbringen des Verschlusses beim Abkühlen schrumpft, so daß die miteinander verbundenen Verschlußbänder und Schaumstoffrohr um das gleiche Maß schrumpfen. Das erfindungsgemäße Verfahren ermöglicht auf diese Weise das Herstellen gerader Rohre. Die Schaumstoffrohre schrumpfen nämlich nach der Warmformung beim Abkühlen, wobei dieser Schrumpf teils thermisch bedingt ist und teils aus einer Längung infolge Reibungswiderständen während des Transports und der Formgebung herrührt. Durch die erfindungsgemäß vorgesehene entsprechende Reckung der Verschlußbänder wird die nachträgliche Längenänderung des Schaumstoffrohres ausgeglichen, in dem der Verschluß in gleicher Weise mitschrumpft. Damit werden gerade Rohre mit Verschlüssen hergestellt. Damit ist aber der Nachteil vermieden, bei den bekannten Verfahren zuerst das geformte geschlossene Rohr herzustellen, das nach seiner Abkühlung und Schrumpfung erst geschlitzt wird und anschließend in diesem Schlitzbereich mit Verschlußbändern versehen wird.

Nach einer Ausführungsweise der Erfindung werden die Verschlußbänder mittels einer Reibradbremse mit einer einstellbaren die aufzubringende Zugspannung regelnden Stellfeder vor dem haftfesten Verbinden mit dem Schaumstoffrohr gelängt. Der Grad der Längung richtet sich nach den jeweiligen Schaumstoffrohren, d. h. insbesondere nach der Wanddicke der Schaumstoffrohre. Die Längung liegt in der Regel zwischen 0,5 und 8%.

Bevorzugt werden die Verschlußbänder auf die zum Rohr geformte unverschlossene Schaumstoffbahn unter Zufuhr von Heißluft aufgebracht und hierbei das Rohr auf seiner Außenseite und Innenseite im Bereich der Längskanten unter Kühlung geführt. Das Aufschweißen eines Verschlusses bietet sich beispielsweise bei solchen Isolierrohren an, die aus gut schweißfähigem Material sind, wie beispielsweise Polyethylenschaumstoffen, vernetzten bzw. unvernetzten, die sich mit Polyethylen-Gleitverschlüssen sehr gut direkt verbinden lassen. Da für das Verschweißen der Verschlußbänder mit dem Rohr relativ hohe Temperaturen der Schweißluft zwischen 300 und 600° C angewendet werden, wird die Vorrichtung und damit das Schaumstoffrohr aufgeheizt, so daß es zum Ankleben an der Vorrichtung neigt. Aus diesem Grunde ist erforderlich, im Bereich der Schweißung die Vorrichtung und die Führung für das Rohr stark zu kühlen, um so ein Ankleben des Schaumstoffrohres zu vermeiden.

Ausgehend von bekannten Vorrichtungen zum Herstellen von Isolierrohren durch Verformen von Schaumstoffbahnen bzw. Schaumstoffstreifen wird erfindungsgemäß vorgeschlagen, daß die Vorrichtung mit einer Reibradbremse mit einer Bremsrolle mit mittels Stellfeder einstellbarem Reibwiderstand für die Längung der Verschlußbänder, mit einer auf der Rohrinnenseite im Bereich des Schlitzes an dem Rohr anliegenden gekühlten Führung, insbesondere als Kühlrohr und ggf. verstellbar ausgebildet, und mit einer auf der Rohraußenseite im Bereich des Schlitzes aufliegenden gekühlten Gleitplatte mit Führungsnut und Einlauföffnung für die Verschlußbänder ausgerüstet ist.

Weitere Ausgestaltungen der erfindungsgemäßen Vorrichtungen sind gemäß den Merkmalen der Ansprüche 5 bis 10 vorgesehen.

Die Erfindung wird in der nachfolgenden Zeichnung anhand eines Ausführungsbeispieles näher erläutert. Die erfindungsgemäßen Merkmale werden hierbei im einzelnen dargelegt. Die

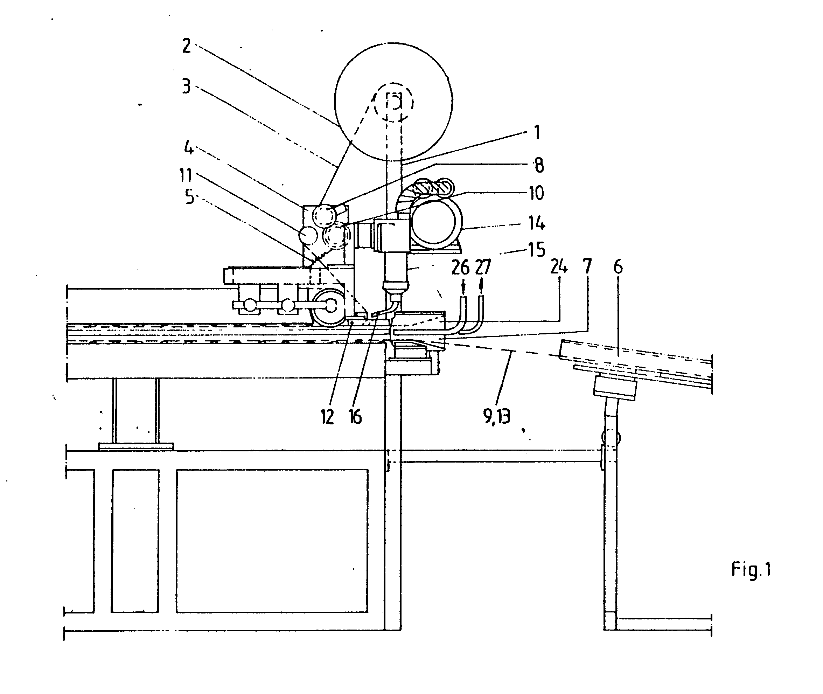

Fig. 1 zeigt in schematischer Ansicht den Aufbau der Rohranlage mit Einrichtung zum haftfesten Aufbringen von Verschlüssen,

Fig. 2 zeigt ausschnittsweise den Verbindungsbereich von Verschluß mit Isolierrohr im Längsschnitt,

Fig. 3 zeigt den Verbindungsbereich nach Fig. 2 gemäß Schnitt AA im Querschnitt und

Fig. 4 zeigt einen Ausschnitt aus dem mit Gleitverschluß versehenen Schaumstoffrohr.

Nach Verfahren wie beispielsweise in der deutschen Patentschrift 2 532 406 beschrieben, werden aus Schaumstoffstreifen, beispielsweise aus vernetzten Polyolefinschaumstoffen unter Anwendung von Wärme Isolierrohre geformt. Das geformte Isolierrohr 13, das noch nicht verschlossen ist, verläßt die Formröhre 6 und wird mittels eines Transportbandes 9 der Vorrichtung zum Aufbringen eines Gleitverschlusses 3 mit zwei Verschlußbändern 3a, 3b zugeführt.

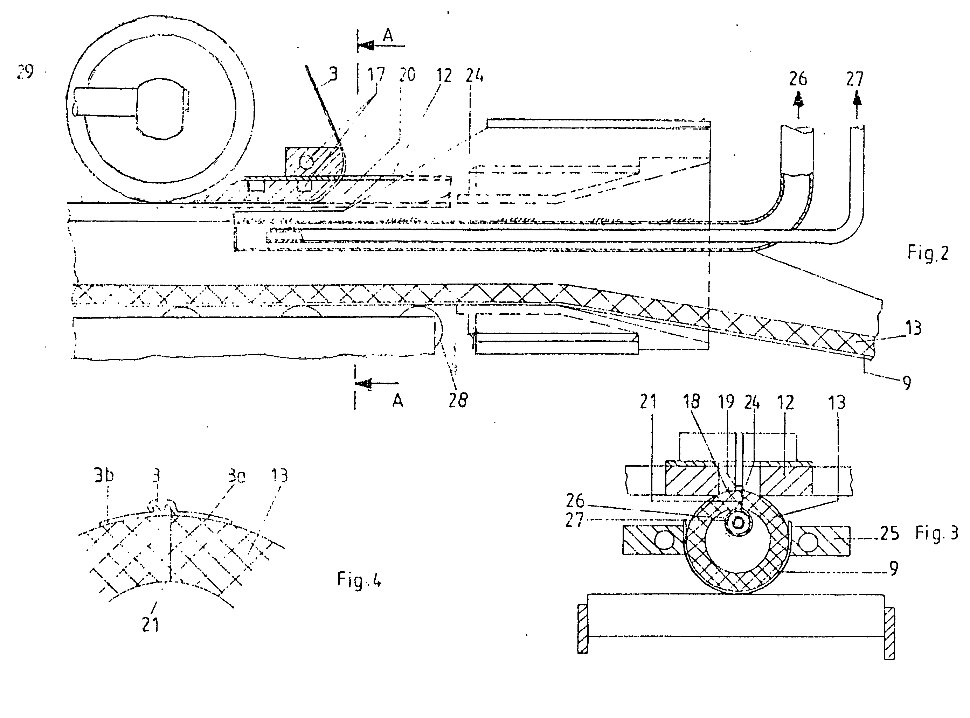

Diese Vorrichtung besteht im wesentlichen aus einem Ständer 1, von dem von einer aufgegebenen Spule 2 der Verschluß aus den Verschlußbändern 3a, 3b siehe Fig. 4, abläuft. Der Verschluß 3 z. B. ein Gleitverschluß aus PE durchläuft zunächst eine Bremsvorrichtung 4, mit der eine gleichbleibende, über eine Stellfeder 5 einstellbare Zugspannung im Gleitverschluß erzeugt wird. Diese Bremsvorrichtung ist erforderlich zur Erzeugung gerader Rohre. Das Schaumstoffrohr 13 selbst schrumpft noch nach der Herstellung. Dieser Schrumpf ist teils thermisch bedingt, da das Rohr noch nicht voll ausgekühlt ist, und rührt teils aus Längung infolge Reibungswiderständen in den einzelnen Vorrichtungsbereichen, wie Formröhre 6 und Einlauftrichter 7 her. Durch entsprechende Reckung der Gleitverschlußbänder 3 kann die nachträgliche Längenänderung des Schaumrohres ausgeglichen werden.

Es hat sich gezeigt, daß Gleitbremsen, bei denen der Verschluß durch Klemmen gebremst wird, diese Aufgabe nur unzureichend erfüllen. Es findet deshalb eine sogenannte Reibradbremse Anwendung, bei der der Gleitverschluß 3 zunächst über eine profilierte Führungsrolle 8, auf die durch eine mit einstellbarer Feder 5 und Bremsbelag gebremste, gummierte Bremsrolle 10 aufläuft. Die ebenfalls profilierte Rolle 11 bewirkt eine weitgehende Umschlingung der Bremsrolle 10 und die Führung des Gleitverschlußbandes 3 zum Einlauf in die Gleitplatte 12.

Im Bereich der Gleitplatte 12 wird der Verschluß 3 auf den zum Rohr geformten, unverschlossenen Schaumstreifen 13 aufgebracht. Die Aufbringung erfolgt vorzugsweise durch Heißluftschweißung. Hierzu wird über ein Gebläse 14 durch einen Heißlufterhitzer 15 und über Luftleitdüsen 16 erhitzte Luft auf den Gleitverschluß und den Aufbringungsbereich des Schaumrohres gerichtet. Zur Sicherstellung einer kontinuierlichen Fertigung wird die Gleitplatte 12 über Kühlkanäle 17 mittels eines Kühlmediums (Wasser, Luft, etc.) kaltgehalten, da sie sich sonst über die hohe Temperatur (ca. 300 bis 600°C) der Schweißluft aufheizen und somit zum Ankleben des Schaumrohres führen würde. Zwecks Erzeugung runder Rohre ist die Gleitplatte 12 mit einer etwa dem Außendurchmesser der Isolierrohre entsprechenden Rundung 18 versehen. Sie besitzt ferner eine Führungsnut 19 ab der Einlaufsöffnung 20 für das Verschlußband 3. Die Führungsnut 19 ist in bezug auf die Stoßstellen 21 des Schaumrohres 13 außermittig angeordnet, und zwar so, daß das unten liegende Verschlußband 3b des Gleitverschlusses 3 bündig mit der Längskante 21 des Rohres aufliegt. Zur Führung der Kanten 21 des Schaumrohres 13 im Bereich der Gleitplatte 12 ragt in einen Schlitz 23 der Gleitplatte 12 ein Leitblech 24. Dieses Leitblech 24 dient der Ausrichtung der Kanten 21 des Schaumrohres 13 zum Gleitverschluß 3. Auch dieses Leitblech 24 wird zur Sicherstellung einer kontinuierlichen Fertigung aus vorerwähnten Gründen gekühlt. Es ist deshalb ebenso wie die Gleitplatte 12 aus gut wärmeleitendem Material (Kupfer, Messing oder Aluminium etc.) angefertigt. Das Leitblech 24 trägt dazu an seiner Unterkante ein Kühlrohrsystem mit Vorlauf 26 und Rücklauf 27 für das Kühlmedium. Die Oberfläche des Außenrohres 26 dieser Kühlung dient gleichzeitig als Widerlager für das Schaumrohr 13 zur Erzeugung der für die Aufbringung des Gleitverschlusses 3 erforderlichen Anpreßkraft. Das Leitblech 24 mit dem Kühlsystem 26, 27 ist auf die Wanddicke des Schaumrohres 13 höhenverstellbar an einer nicht dargestellten Halterung befestigt. Hiermit kann die Anpreßkraft eingestellt werden.

Die Vorrichtung zur Aufbringung der Gleitverschlüsse ist als kompakte Einheit gebaut und kann mit sehr geringem Umrüstungsaufwand gegen eine andere Vorrichtung der Rohranlage ausgetauscht werden. Zum Anfahren der Anlage und im Störungsfall kann der Heißlufterzeuger mit den Luftleitdüsen z. B. seitlich über Pneumatikzylinder auf Führungsstangen bewegt werden. Die Verbindung des Gleitverschlusses mit dem Schaumrohr erfolgt vorzugsweise wie beschrieben durch Heißluftschweißung. Anstelle der Heißluftschweißung könnte auch eine Flammschweißung mit einer Flammkaschieranlage angewendet werden. Nach gleichem Verfahren können auch mit Heißsiegelklebern beschichtete Verschlußbänder auf Isolierrohre aufgebracht werden. Die Schweißtemperaturen können entsprechend den Materialeigenschaften der Verschlußbänder bzw. des Heißsiegelklebers und der Fertigungsgeschwindigkeit stufenlos geregelt werden.

## Patentansprüche

1. Verfahren zum kontinuierlichen Herstellen eines in Längserstreckung geschlitzten Rohres (13) aus einer Bahn aus einem thermoplastischen Schaumstoff durch Formen der Bahn im erwärmten thermoelastischen bzw. thermoplastischen Zustand quer zu ihrer Längserstreckung zum Rohrquerschnitt und Aufbringen der Bänder (3) eines Verschlusses, insbesondere Gleitverschlusses aus thermoplastischem Kunststoff an den einander zugekehrten Längskanten des Rohrschlitzes durch Schweißen, Heißsiegeln, Verkleben o. dgl., dadurch gekennzeichnet, daß die Verschlußbänder vor dem Verbinden mit dem geformten noch erwärmten Schaumstoffrohr in dem selben Maß durch Einwirkung einer Zugspannung gelängt werden, wie das Schaumstoffrohr nach dem Aufbringen des Verschlusses beim Abkühlen schrumpft, so daß die miteinander verbundenen Verschlußbänder und das Schaumstoffrohr um das gleiche Maß schrumpfen.

2. Verfahren nach Anspruch 1, dadurch gekennzeichnet, daß die Verschlußbänder (3) mittels einer Reibradbremse (10) mit einer einstellbaren die aufzubringende Zugspannung regelnden Stellfeder (5) vor dem haftfesten Verbinden mit dem Schaumstoffrohr (13) gelängt werden.

3. Verfahren nach einem der Ansprüche 1 oder 2, dadurch gekennzeichnet, daß die Verschlußbänder (3) auf die zum Rohr (13) geformte unverschlossene Schaumstoffbahn mittels Heißluft aufgebracht werden und hierbei das Rohr auf seiner Außenseite und Innenseite im Bereich der Längskanten unter Kühlung geführt wird.

4. Vorrichtung zum Durchführen des Verfahrens nach einem der Ansprüche 1 bis 4 mit einem umlaufenden Transportband (9) für die kontinuierlich zulaufende Schaumstoffbahn, einem Einlauftrichter und einer Einrichtung zum Verschließen des Schlitzes und einer Zuführeinrichtung für die Verschlußbänder (3), dadurch gekennzeichnet, daß eine Reibradbremse mit einer Bremsrolle (10) mit mittels Stellfeder (5) einstellbarem Reibwiderstand für die Längung der Verschlußbänder (3), eine auf der Rohrinnenseite im Bereich des Schlitzes (21) an dem Rohr (13) anliegende gekühlte Führung (26, 27), insbesondere als Kühlrohr und ggf. verstellbar ausgebildet, eine auf der Rohraußenseite im Bereich des Schlitzes aufliegende gekühlte Gleitplatte (12) mit Führungsnut (19) und Einlauföffnung (20) für die Verschlußbänder (3) vorgesehen sind.

5. Vorrichtung nach Anspruch 4, dadurch gekennzeichnet, daß der Bremsrolle (10) nachfolgend eine Rolle (11) derart zugeordnet ist, daß der Umschlingungswinkel der von der Bremsrolle (10) ablaufenden Verschlußbänder (3) auf der Bremsrolle (10) mindestens 180°C beträgt.

6. Vorrichtung nach Anspruch 4 oder 5, dadurch gekennzeichnet, daß die Gleitplatte (12) mit Kanälen (17) zum Durchleiten eines Kühlmediums wie Wasser, Luft o. dgl. ausgebildet ist.

7. Vorrichtung nach einem der Ansprüche 4 bis 6, dadurch gekennzeichnet, daß die Gleitplatte (12) auf ihrer auf dem Rohr (13) anliegenden Unterseite mit einer etwa der Rohrkrümmung entsprechenden Rundung (18) ausgebildet ist.

8. Vorrichtung nach einem der Ansprüche 4 bis 7, dadurch gekennzeichnet, daß im Bereich der Gleitplatte (12) ein gekühltes Leitblech (24) angeordnet ist, das zwischen die Längskanten (21) des Rohres (13) ragt.

9. Vorrichtung nach einem der Ansprüche 7 oder 8, dadurch gekennzeichnet, daß die für die Rohrinnenseite vorgesehene gekühlte Führung (26, 27) an dem Leitblech (24) befestigt ist.

10. Vorrichtung nach einem der Ansprüche 4 bis 9, dadurch gekennzeichnet, daß ein Heißlufterzeuger (15) mit Gebläse (14) vorgesehen ist, wobei die Luftleitdüse (16) so ausgerichtet ist, daß sie auf die Verschlußbänder und den Aufbringungsbereich des Rohres gerichtet ist.

## Claims

1. Process for the continuous production of a tube (13) slit in the longitudinal direction from a length of a thermoplastic plastics by shaping of the length in the warm thermo-elastic or thermoplastic condition at right angles to its longitudinal direction into a tubular cross-section and application of the bands (3) of a closure, especially sliding closure, formed of thermoplastic plastics to the longitudinal edges of the slit tube which are directed towards one another, by welding, heat sealing, bonding or the like, characterised in that the closure bands are elongated before bonding with the shaped still warm foamed tube by application of a tensile force to the same extent as the foam tube shrinks on cooling, after application of the closure, so that the closure bands and the foam tube connected with one another shrink to approximately the same extent.

2. Process according to claim 1, characterised in that the closure band (3) are elongated before the adhesive bonding with the foam tube by means of a friction wheel brake (10), with an adjustable spring (5) controlling the tensile force being applied.

3. Process according to one of claims 1 or 2, characterised in that the closure bands (3) are applied to the unclosed foam length shaped into the tube (13) by means of hot air and wherein the tube is guided while undergoing cooling on its exterior side and interior side in the region of the longitudinal edges.

4. Apparatus for carrying out the process according to one of claims 1 to 3 with a circulating conveyor belt (9) for the continuously supplied foam length, an entry funnel and a arrangement for the closing of the slit and a supply arrangement for the closure bands (3), characterised in that there are provided a frictional wheel brake with a brake roller 10 with frictional resistance for the elongation of the closure bands (3) adjustable by means of spring (5), a duct (26, 27) cooled at the tube inner surface lying in the region of the slit in the tube, formed especially as a cooling tube and optionally adjustable, a slide plate (12) with guide groove (19) cooled as it contacts the tube outer surface in the region of the slit and entry opening (20) for the closure bands (3).

5. Apparatus according to claim 4, charaterised in that the braking roller (10) is so arranged following a roller (11) that the wrapping angle of the closure bands (3) running of from the braking roller (10) amounts to at least 180° with respect to the braking roller (10).

6. Apparatus according to claim 4 or 5, characterised in that the slide plate (12) is formed with channels (17) for conducting therethrough of a cooling medium such as water, air or the like.

7. Apparatus according to one of claims 4 to 6, characterised in that the sliding plate (12) is formed on its underside adjacent the tube (13) with a rounding (18) corresponding approximately to the tube curvature.

8. Apparatus according to one of claims 4 to 7, characterised in that there is arranged in the region of the slide plate (12) a cooled sheet metal guide (24) which extends between the longitudinal edges (21) of the tube (13).

9. Apparatus according to one of claims 7 or 8, characterised in that the cooled duct (26, 27) provided for the inner side of the tube is fastened to the sheet metal guide (24).

10. Apparatus according to one of claims 4 to 9, characterised in that a hot air generator (15) is provided with blower (14), with the air duct nozzle (16) being so arranged that it is directed onto the closure bands and the application region of the tube.

**Revendications**

1. Procédé de fabrication continue d'un tube (13) fendu longitudinalement, à partir d'une bande continue en matière mousse thermoplastique, à laquelle on confère, alors qu'elle est thermiquement mise à l'état plastique ou élastique, la forme de la section droite du tube par un formage effectué transversalement à sa longueur, et l'on applique des ruband (3) d'une fermeture, notamment d'une fermeture à glissière en matière plastique, sur les bords longitudinaux mutuellement rapprochés de la fente du tube, cette application étant faite par soudage, collage à chaud, collage, ou analogue, caractérisé par le fait qu'avant d'être liés au tube de matière mousse encore chaud, les rubans de fermeture sont soumis, par action d'une tension mécanique, à un allongement d'ampleur égale à celle de la contraction du tube de matière mousse lors de son refroidissement après application de la fermeture, de sorte que les rubans de fermeture et le tube de matière mousse, mutuellement liés, se contractent avec la même ampleur.

2. Procédé selon la revendication 1, caractérisé par le fait qu'avant leur assemblage par adhérence au tube de matière mousse (13), les rubans de fermeture (3) sont allongés au moyen d'un frein à roue de frottement (10) ayant un ressort de réglage (5) ajustable, réglant la tension mécanique à appliquer.

3. Procédé selon l'une des revendications 1 ou 2, caractérisé par le fait que les rubans de fermeture 3 sont appliqués au moyen d'air chaud sur la bande continue de matière mousse non fermée, formée en tube (13), le tube étant, lors de cette application, guidé et refroidi, extérieurement et intérieurement, dans la région de ses bords longitudinaux.

4. Dispositif de mise en oeuvre du procédé selon l'une des revendications 1 à 4, comportant une bande transporteuse circulante (9) pour transporter la bande continue de matière mousse arrivant en continu, un entonnoir d'entrée et un agencement d'amenée des rubans de fermeture (3), caractérisé par le fait qu'il est prévu: un frein à roue de frottement avec galet de freinage (10) à résistance de frottement réglable au moyen d'un ressort de réglage (5), pour provoquer l'allongement des rubans de fermeture (3); un guide refroidi (26, 27) s'appliquant sur le côté intérieur du tube (13), dans la région de la fente (21), ce guide étant notamment réalisé sous la forme d'un tube de refroidissement et étant éventuellement ajustable; et une platine de glissement refroidie (12) s'appliquant sur le côté extérieur du tube, dans la région de la fente, et pourvue d'une rainure de guidage (19) et d'une ouverture (20) pour l'entrée des rubans de fermeture (3).

5. Dispositif selon la revendication 4, caractérisé par le fait que le galet de freinage (10) est suivi par une poulie (11) qui lui est conjuguée de manière que l'angle de contact circonférentiel des rubans de fermeture (3) sur ce galet de freinage (10) soit d'au moins 180°.

6. Dispositif selon la revendication 4 ou 5, caractérisé par le fait que la platine de glissement (12) est réalisée avec des canaux (17) pour le passage d'un fluide réfrigérant tel que l'eau, l'air ou analogue.

7. Dispositif selon l'une des revendications 4 à 6, caractérisé par le fait que la platine de glissement (12) présente, en son côté inférieur s'appliquant sur le tube (13), un arrondi (18) correspondant sensiblement à la courbure du tube.

8. Dispositif selon l'une des revendications 4 à 7, caractérisé par le fait qu'une tôle de guidage refroidie (24) débordante, située entre les bords longitudinaux (21) du tube (13), est agencée dans la région de la platine de glissement (12).

9. Dispositif selon l'une des revendications 7 ou 8, caractérisé par le fait que le guide refroidi (26, 27) prévu pour guider et refroidir le côté intérieur du tube, est fixé à la tôle de guidage (24).

10. Dispositif selon l'une des revendications 4 à 9, caractérisé par le fait qu'il comporte un générateur d'air chaud (15) avec ventilateur (14) et buse d'air (16) agencée de manière à être dirigée sur les rubans de fermeture et leur zone d'application sur le tube.

Fig.1

0 076 929

29

3 17 20 12 24

A

26 27

Fig.2

13

A

28

9

6

0 076 929

3b 3 3a 13

21

Fig.4

21 18 19 24 12 13

26
27

25 Fig.3

9